Europäisches Patentamt

European Patent Office

Office européen des brevets

(19)

(11) Publication number : **0 473 680 B1**

(12) **EUROPEAN PATENT SPECIFICATION**

(45) Date of publication of patent specification :
04.08.93 Bulletin 93/31

(51) Int. Cl.$^5$ : **C02F 1/78,** C02F 1/32,
C02F 1/28

(21) Application number : 90908692.8

(22) Date of filing : 23.05.90

(86) International application number :
PCT/NL90/00075

(87) International publication number :
WO 90/14312 29.11.90 Gazette 90/27

(54) PROCESS FOR THE PURIFICATION OF CONTAMINATED WATER BY ACTIVATED OZONE.

(30) Priority : 23.05.89 NL 8901289
05.06.89 NL 8901420

(43) Date of publication of application :
11.03.92 Bulletin 92/11

(45) Publication of the grant of the patent :
04.08.93 Bulletin 93/31

(84) Designated Contracting States :
AT BE CH DE DK ES FR GB IT LI LU NL SE

(56) References cited :
DE-A- 2 729 760
FR-A- 2 291 687
NL-A- 296 272
US-A- 3 924 139
Wasser Berlin '89, 10-16 April 1989, International Ozone Association, P.J. Piscaer et al.:
"Use of photozone/UV for groundwater treatment", pages I.4.1. - I.4.7., see page I.4.1.,
abstract; page I.4.2., line 1 - page I.4.5.
Rijkswaterstaat - Dienst Binnenwateren/RIZA,
report no. 88.028, August 1988, Grontmij NV De
Bilt, (De Bilt, NL), "Nieuwe grondwaterzuiveringstechnieken bij bodemsanering", pages
69-73, see page 69, figures 6,7 - page 71, line
14
Wasser Berlin '89, 10-16 April 1989, International Ozone Association, T.K. Underbrink
et al.: "Removal of TCE, PCE and CTC from a
contaminated groundwater using UV/ozone",
pages V-4-1 - V-4-10, see page V-4-1, abstract;
page V-4-2, line 1 - page V-4-5
Database WPIL, no. 77-40575Y (23), Derwent
Publications Ltd, (London, GB).
Patent Abstracts of Japan, vol. 13, no. 293
(C-615)(3641), 6 July 1989.

(56) References cited :
Database WPIL, no. 140939 (20), Derwent
Publications Ltd, (London, GB).
Patent Abstracts of Japan, vol. 2, no. 148
(C-030), 9 December 1978.

(73) Proprietor : ECO PURIFICATION SYSTEMS
B.V.
Patrijsweg 90
NL-2289 EX Rijswijk (NL)

(72) Inventor : CAMPEN, Jan, Peter
Schouweg 18
NL-2243 BB Wassenaar (NL)
Inventor : MOSER, John-Antoine
Willemstraat 70
NL-2514 HN The Hague (NL)

(74) Representative : de Bruijn, Leendert C. et al
Nederlandsch Octrooibureau
Scheveningseweg 82 P.O. Box 29720
NL-2502 LS Den Haag (NL)

## Description

The invention relates to a process for the treatment of water which is contaminated with undesirable components, such as halogenated hydrocarbons, by treating the contaminated water or the gaseous and/or liquid components present therein or resulting therefrom with ozone and a solid catalyst, optionally in combination with a treatment with UV radiation.

A process of this type is known from FR-A-2 291 687. The catalysts used are of a known type and may be selected from two groups. The first group comprises catalysts containing metals from the platinum group, i. e. platinum, palladium, rhenium, ruthenium, osmium, and irridium, said metals being present per se or in the form of their oxides. The second group comprises catalysts containing oxides of the following elements: copper, cobalt, chromium, manganese, molybdenum, vanadium, tungsten, cerium, and iron. The catalysts may be used on a support such as alumina or silica. An important disadvantage of this known purification system is that catalyst-activity is destroyed in a very short time by the adsorption of the polluting substances onto the catalyst surface.

It has been found that this problem may be avoided if in the process as indicated in the preamble activated carbon is used as the catalyst and if a continuous regeneration with ozone is performed. It is surprising that ozone can be used for regenerating the catalyst because it could have been expected that ozone would be decomposed when it is in contact with activated carbon.

When carrying out the process of the invention the contaminated water may come available as groundwater from waste deposits, but also as direct effluents from household activities, urban conglomerates and industries.

From environmental point of view, such effluents cannot be discharged without a thorough purification. Most current technologies like concentration/incineration, wet air oxidation, biotreating etc., have distinct disadvantages. They are either not economically viable, generate secondary waste problems or do not achieve sufficiently low residual concentrations for environmentally acceptable solutions.

The invention provides a solution for the abovementioned problems. It is applicable to a variety of toxic components in waste streams like halogenated hydrocarbons, including chlorine and bromine containing compounds, dioxines and PCB's, pesticides, insecticides, (polycyclic) aromatics, cyanides, (glycol) esters, organic acids, alcohols, hydrocarbons, etc., as well as micro-organisms.

The process according to the invention can be applied in the vapour phase (volatile components) as well as in the liquid phase. In both cases the active reagents are assumed to be oxidative radicals derived from activated ozone by a solid catalyst, optionally also by short wave UV radiation.

If UV radiation is applied at a wavelength below 200 nm, and preferably at 185 nm, ozone can be produced from oxygen containing gas as well. At a wavelength in excess of 200 nm, and more specifically at 245 nm, UV radiation only activates ozone but does not form additional ozone.

Good results have been obtained using activated carbon having a surface area of 400-800 m2 gram). In practice, the solid catalyst should have a surface area of at least 50 $m^2$/gram and a pore volume greater than 0.1 $cm^3$/gram.

In the vapour phase the reactions take place very fast (within a few seconds at ambient temperature). In the liquid phase, ozone is injected through a diffusor or an injection system such as a venturi; the reaction proceeds much slower than in the vapour phase. For many applications a combination of gas treatment and liquid phase treatment is favourable.

Because the reaction proceeds reasonably fast at ambient temperature, higher temperatures are usually not required. However, treatment at higher temperatures is feasible and often preferable.

The invention can be conducted in several types of equipment e.g. co-current (liquid and ozone gas in the same direction) or countercurrent in a stripping tower.

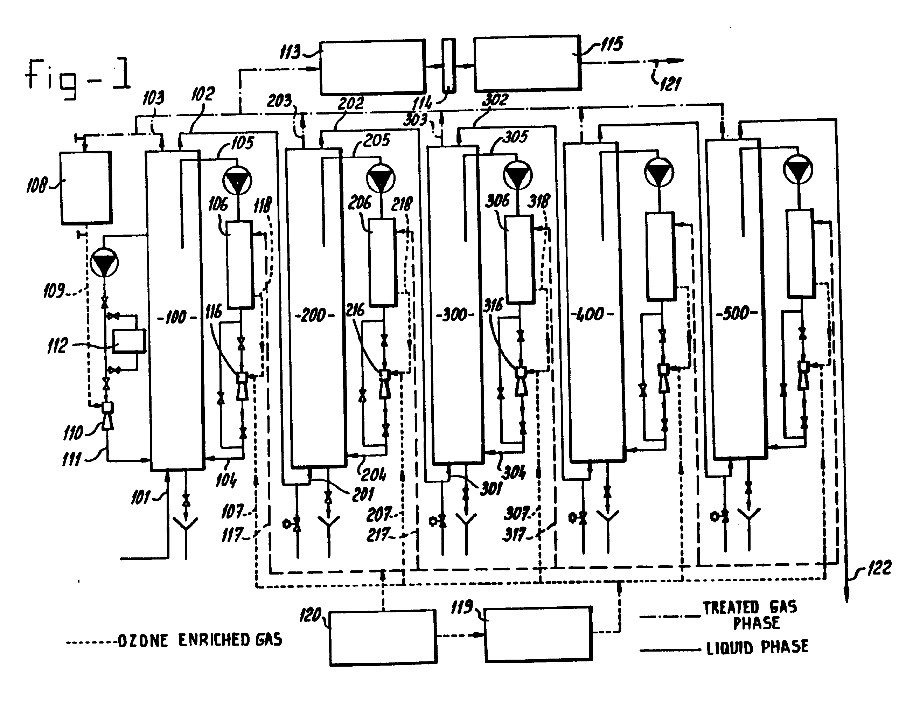

A co-current equipment is illustrated in Figure 1. The apparatus consists of 1-10 reactors in series and was used for purifying the groundwater of the Volgermeerpolder in The Netherlands. The conversions obtained with ozone/UV in the liquid phase and with ozone/active carbon in the vapour phase are given in Table 1. It will be seen that e.g. a toxic component like monochlorobenzene is degraded with an efficiency of 99.99% The products were mainly water, carbon dioxide and NaCl (after neutralization of the HCl formed).

## Table 1

### GROUNDWATER PURIFICATION

### VOLGERMEERPOLDER

| contaminant | influent level (ppb) | effluent level (ppb) | local limits for discharge on surface water (ppb) |
|---|---|---|---|
| monochlorobenzene | 7900 | 1.0 | 1.0 |
| chlorophenols | 500 | 0.3 | 1.0 |
| EOCl | 810 | 3.3 | 5.0 |
| polycyclic aromatics | 40 | 0.6 | 1.0 |
| naphthalene | 25 | 0.5 | 1.0 |
| phenol | 27 | 0.5 | 1.0 |
| alkylphenols | 320 | 0.2 | 1.0 |
| benzene | 1400 | 0.5 | 1.0 |

In the apparatus according to the invention, a variety of toxic components can be degraded. The apparatus consists of from 1 up to 10 reactors (100, 200, 300, ...) which can be columns packed with activated carbon. The said reactors have a contaminated water supply (101, 201, 301, ...), a water discharge (102, 202, 302, ...) and a gas discharge (103, 203, 303, ...); further, the reactors (100, 200, 300, ...) are equipped with a recycle supply (104, 204, 304, ...) for ozone containing liquid and a recycle discharge (105, 205, 305, ...) for ozone depleted liquid, whereby a UV treating unit (106, 206, 306, ...) and/or an ozone supply (107, 207, 307, ...) can be included between the recycle supply (104, 204, 304) and the recycle discharge (105, 205, 305, ...).

The gas discharge (103) which is connected to a UV treating unit (108), and/or the gas discharge (109) of UV treating unit (108) is fed to a venturi (110) incorporated in a liquid recycle loop (111), which loop is connected to a reactor (100). In the liquid recycle loop (111), an electromagnetic water treatment installation (112) for eliminating metals such as iron or calcium, can be incorporated.

The ozone supply (107, 207, 307, ...) can advantageously be provided via an injection system such as a venturi (116, 216, 316, ...) connected to the water recycle loop (104, 204, 304, ...).

As a result of intensive mixing of ozone (gas) and water as well as as a result of the presence of recycle loops, the reactions take place both in the water phase and in the vapour phase. After the ozone treatment, the residual gases are purified by an "active filter" (114) containing a solid catalyst as specified above. If necessary, additional ozone can be added just before the catalyst layer.

The purified gases can be discharged into the air (121) and the purified water can in general be discharged (122) onto local surface water.

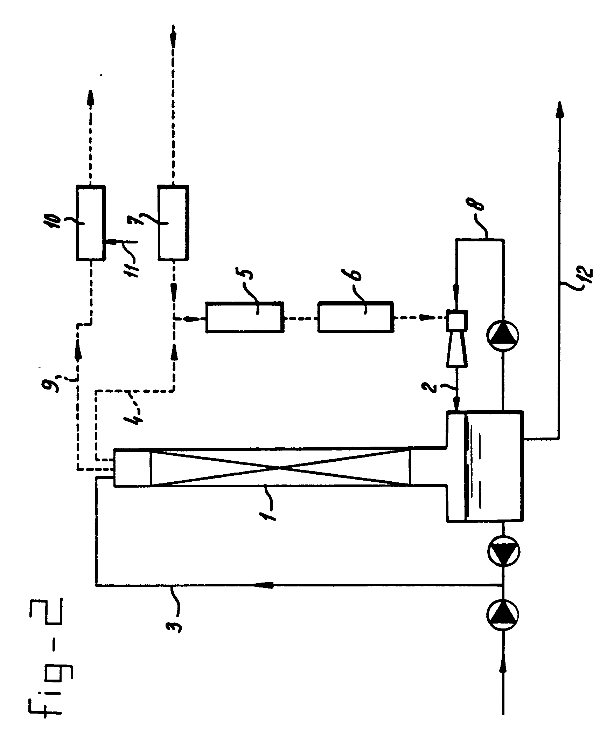

The invention can also be applied countercurently. The apparatus (Fig 2) comprises a stripping tower (1) having a supply (2) for gas and/or gas containing liquid on the lower side, and on the upper side both a liquid supply (3) and a gas discharge (4) which is connected to a UV treating unit (5, 6) and to an ozone supply unit (7). The discharge of the UV treating unit(s) (5, 6) is connected to a liquid supply (2) of a recycle loop (8). A stripping tower is particularly advantageous when the majority of the toxic components are volatile and the heavy components can be oxidized relatively easily. In that case, a single stripping tower will be sufficient, but 2-5 towers can be used as well. The gases leaving the tower (9) may contain residual toxic components. These can be degraded with additional ozone (11) in a separate reactor (10) containing a solid catalyst as specified above. Also in the stripping tower the use of catalyst rather than a conventional filling material will in most cases be preferable.

The stripping tower as described in figure 2 was applied for purifying an industrial waste stream containing 7 431 mg/l of dichloromethane. It was shown that by adding sufficient caustic soda to neutralize the HCl formed and by using ozone/UV as the oxidizing agent, the effluent contained 68 mg/l only, thus achieving a conversion of 99.1%. By using active carbon and silica as a catalyst in combination with ozone, a conversion of 99.9% was achieved.

The invention also relates to processes carried out with the abovementioned apparatus, as described in the claims.

## Claims

1. Process for the treatment of water which is contaminated with undesirable components, such as halogenated hydrocarbons, by treating the contaminated water or the gaseous and/or liquid components present therein or resulting therefrom with ozone and a solid catalyst, optionally in combination with a treatment with UV radiation, characterized in that activated carbon is used as the catalyst, which is continuously regenerated with ozone.

2. Process according to claim 1, wherein a catalyst having a surface area of at least 50 $m^2$/gram and a pore volume of at least 0.1 $cm^3$/gram is used.

3. Process according to claim 1 or 2, wherein the ozone is produced by subjecting oxygen containing gas to UV radiation having a wavelength of less than 200 nm, particularly around 185 nm, or by means of an electric discharge.

4. The process according to any of claims 1-3 using an apparatus comprising one or more reactors (100, 200, ...) packed with a solid catalyst, said reactors being equipped with a contaminated water supply (101, 201, ...), a water discharge (102, 202, ..) and a gas discharge (103, 203, ...), a recycle supply (104, 204, ...) for ozone containing liquid and a recycle discharge (105, 205, ...) for ozone depleted liquid.

5. Process according to claim 4, wherein a UV treating unit (106, 206, ...) and/or an ozone supply (107, 207, ...) is provided between the recycle supply (104, 204, ...) and the recycle discharge (105, 205, ...).

6. Process according to claim 5, wherein the ozone supply (107, 207, ...) is connected to the water recycle loop (104, 204, ...) via an injection system such as a venturi (116,216, ...).

7. Process according to any of claims 4-6, wherein the off gas discharge (103, ...) is connected, optionally via a UV treating unit (108) and/or a recycle gas discharge (109), to a venturi (110) incorporated in a liquid recycle loop (111), which loop is connected to a reactor (100).

8. Process according to any one of claims 4-7, wherein the gas discharge (103, 203, ...) is connected to an active filter (114) containing a solid catalyst having a surface area of at least 50 $m^2$/gram and a pore volume of over 0.1 $cm^3$/gram.

9. The process according to any of claims 1-3 using an apparatus comprising a stripping tower (1) having a supply (2) for gas and/or gas contining liquid on the lower side, and on the upper side both a supply for the liquid to be treated (3) and a gas discharge (4) connected to a UV treating unit (5,6) and to an ozone supply unit (7), whereby the discharge of the UV treating unit(s) (5,6) is optionally connected to the supply (2) of the stripping tower (1), and the supply (2) can be part of a recycle loop (8).

10. Process according to claim 9, wherein a solid catalyst is contained in the stripping tower (1) and/or in a unit (10) for treating the residual gas stream (9), which unit is connected to an ozone supply (11).


## Patentansprüche

1. Verfahren für die Behandlung vom Wasser, das mit unerwünschten Bestandteilen wie Halogenkohlenwasserstoffen verunreinigt ist, dadurch, daß das verunreinigte Wasser oder die gasförmigen und/oder flüssigen Bestandteile, die darin vorhanden sind oder daraus entstehen, mit Ozon und einem festen Katalysator, wahlweise in Verbindung mit einer Behandlung durch UV-Strahlen, behandelt werden, dadurch **gekennzeichnet,** daß Aktivkohle als Katalysator verwendet wird, das kontinuierlich mit Ozon regeneriert wird.

2. Verfahren nach Anspruch 1, bei dem ein Katalysator mit einer Oberfläche von mindestens 50 $m^2$/g und einem Porenvolumen von mindestens 0,1 $cm^3$/g verwendet wird.

3. Verfahren nach Anspruch 1 oder 2, bei dem Ozon dadurch, daß ein sauerstoffhaltiges Gas einer UV-Strahlung mit einer Wellenlänge von weniger als 200 nm, insbesondere von ungefähr 185 nm ausgesetzt wird, oder durch eine elektrische Entladung erzeugt wird.

**4.** Verfahren nach einem der Ansprüche 1 bis 3, bei dem eine Vorrichtung verwendet wird, die einen oder mehrere Reaktoren (100, 200, ...) umfaßt, die mit einem festen Katalysator befüllt sind und die mit einer Zuleitung für verunreinigtes Wasser (101, 201, ...), einem Wasserabfluß (102, 202, ...), einem Gasabfluß (103, 203, ...), einer Recycling-Zuleitung (104, 204, ...) für ozonhaltige Flüssigkeit und einem Recycling-Abfluß (105, 205, ...) für von Ozon befreiter Flüssigkeit ausgerüstet sind.

**5.** Verfahren nach Anspruch 4, bei dem eine UV-Behandlungseinheit (106, 206 ...) und/oder eine Ozonzuleitung (107, 207, ...) zwischen der Recycling-Zuleitung (104, 204, ...) und dem Recycling-Abfluß (105, 205, ...) vorgesehen ist.

**6.** Verfahren nach Anspruch 5, bei dem die Ozonzuführung (107, 207, ...) mit der Wasser-Recyclingschleife (104, 204, ...) durch ein Injektionssystem wie einer Venturidüse (116, 216, ...) verbunden ist.

**7.** Verfahren nach einem der Ansprüche 4 bis 6, bei dem der Abgas-Abfluß (103, ...), wahlweise über eine UV-Behandlungseinheit (108) und/oder einen Recyclinggas-Abfluß (109), mit einer Venturidüse (110) verbunden ist, die Bestandteil einer Flüssigkeits-Recyclingschleife (111) ist, wobei diese Schleife mit einem Reaktor (100) verbunden ist.

**8.** Verfahren nach einem der Ansprüche 4 bis 7, bei dem der Gasabfluß (103, 203, ...) mit einem Aktivfilter (114) verbunden ist, der einen festen Katalysator mit einer Oberfläche von mindestens 50 m$^2$/g und einem Porenvolumen von über 0,1 cm$^3$/g enthält.

**9.** Verfahren nach einem der Ansprüche 1 bis 3, bei dem eine Vorrichtung verwendet wird, die einen Strippturm (1) umfaßt, der eine Zuleitung (2) für Gas und/oder eine ein Gas enthaltende Flüssigkeit auf der Unterseite und auf der Oberseite sowohl eine Zuleitung für die zu behandelnde Flüssigkeit (3) als auch einen Gasabfluß (4), der mit einer UV-Behandlungseinheit (5, 6) und mit einer Ozonzuleitungseinheit (7) verbunden ist, aufweist, wobei der Abfluß der UV-Behandlungseinheit(en) (5, 6) wahlweise mit der Zuleitung (2) des Strippturms (1) verbunden ist und die Zuleitung (2) Teil einer Recyclingstreife (8) sein kann.

**10.** Verfahren nach Anspruch 9, bei dem ein fester Katalysator in dem Strippturm (1) und/oder in einer Einheit (10) zum Behandeln des restlichen Gasstroms (9) enthalten ist, wobei diese Einheit mit einer Ozonzuleitung (11) verbunden ist.

## Revendications

**1.** Procédé de traitement de l'eau qui est contaminée par des composants indésirables, comme des hydrocarbures halogénés, par traitement de l'eau contaminée ou des composants gazeux et/ou liquides qui s'y trouvent ou qui en résultent avec de l'ozone et un catalyseur solide, facultativement en combinaison avec un traitement avec des rayons UV, caractérisé en ce qu'on utilise du charbon actif comme catalyseur, que l'on régénère de façon continue avec de l'ozone.

**2.** Procédé selon la revendication 1, dans lequel on utilise un catalyseur ayant une surface d'au moins 50 m$^2$/g et un volume de pores d'au moins 0,1 cm$^3$/g.

**3.** Procédé selon la revendication 1 ou 2, dans lequel on produit l'ozone en soumettant un gaz contenant de l'oxygène à un rayonnement UV ayant une longueur d'onde inférieure à 200 nm, en particulier autour de 185 nm, ou au moyen d'une décharge électrique.

**4.** Procédé selon l'une quelconque des revendications 1 à 3 utilisant un appareil comprenant un ou plusieurs réacteurs (100, 200,...) remplis d'un catalyseur solide, lesdits réacteurs étant équipés d'une alimentation en eau contaminée (101, 201,...), d'une évacuation d'eau (102, 202,...) et d'une évacuation de gaz (103, 203,...), d'une unité de recyclage (104, 204,...) pour le liquide contenant de l'ozone et d'une évacuation de recyclage (105, 205,...) pour le liquide appauvri en ozone.

**5.** Procédé selon la revendication 4, dans lequel on dispose une unité de traitement aux UV (106, 206,...) et/ou une alimentation en ozone (107, 207,...) entre l'alimentation du recyclage (104, 204,...) et l'évacuation du recyclage (105, 205,...).

6. Procédé selon la revendication 5, dans lequel l'alimentation en ozone (107, 207,...) est reliée à la ligne de recyclage de l'eau (104, 204,...) via un système d'injection tel qu'un venturi (116, 216,...).

7. Procédé selon l'une quelconque des revendications 4 à 6, dans lequel l'évacuation de gaz (103,...) est reliée facultativement via une unité de traitement aux UV (108) et/ou une évacuation de gaz de recyclage (109), à un venturi (110) incorporé dans une ligne de recyclage de liquide (111), laquelle ligne est reliée à un réacteur (100).

8. Procédé selon l'une quelconque des revendications 4 à 7, dans lequel l'évacuation de gaz (103, 203,...) est reliée à un filtre actif (114) contenant un catalyseur solide ayant une surface d'au moins 50 m$^2$/g et un volume de pores de plus de 0,1 cm$^3$/g.

9. Procédé selon l'une quelconque des revendications 1 à 3 utilisant un appareil comprenant une colonne de rectification (1) ayant une alimentation (2) pour le gaz et/ou le liquide contenant du gaz sur le côté inférieur, et sur le côté supérieur à la fois une alimentation pour le liquide à traiter (3) et une évacuation de gaz (4) reliée à une unité de traitement aux UV (5, 6) et à une unité d'alimentation en ozone (7), où l'évacuation de la ou des unité(s) de traitement aux UV (5,6) est facultativement reliée à l'alimentation (2) de la colonne de rectification (1), et l'alimentation (2) peut être une partie d'une ligne de recyclage (8).

10. Procédé selon la revendication 9, dans lequel un catalyseur solide est contenu dans la colonne de rectification (1) et/ou dans une unité (10) pour traiter le flux de gaz résiduel (9), laquelle unité est reliée à une alimentation en ozone (11).

Fig-1

TREATED GAS PHASE

-------- LIQUID PHASE

-------- OZONE ENRICHED GAS

Fig-2